# EUROPEAN PATENT APPLICATION

(11) **EP 2 595 424 A1**
(43) Date of publication of application: **22.05.2013**
(21) Application number: 11189713.8
(22) Date of filing: 18.11.2011
(51) Int. Cl.: H04W 24/10, H04W 76/04

(54) **Method and apparatus for controlling data transmission during a circuit switched call**

(71) Applicant: Research In Motion Limited, Waterloo, ON N2L 3W8 (CA)
(72) Inventor: Singh, Ajay, Waterloo, Ontario N2L 3W8 (CA); Aallen, Victor Howard Wayne, Waterloo, Ontario N2L 3W8 (CA); Wirtanen, Jeffrey William, Kanata, Ontario K2K 3K1 (CA)
(74) Representative: Moore, Barry

(57) **Abstract**

Systems and methods are provided for controlling whether non-user initiated polling data is allowed to be transmitted from a wireless device while a circuit switched call is in progress. This can have the effect of reducing call drop rate in systems that suspend handoffs while a packet switched radio access bearer is being established. This behaviour can be made a function of user input or RF conditions.

## Description

### Field

The application relates to the transmission of data to or from a wireless device during a circuit switched call, such as a voice call.

### Background

Some wireless devices, such as wireless devices operating in 3G networks, are running an increasingly large number of applications. The presence of an increasingly large number of applications has increased the frequency of short data transmissions during a voice call (more generally during a CS (circuit switched) call) either as a result of a user initiated activity or polling by various applications. This, in turn, has increased the probability of call drops due to frequent radio bearer reconfigurations during the voice call. These reconfigurations are caused by the addition and deletion of a multi-RAB (radio access bearer). A multi-RAB is primarily a combination of RABs which can, for example, be CS plus PS (packed switched), CS plus PS plus PS or PS plus PS. Deletion of a PS plus CS multi-RAB can be equivalent to simply releasing the PS RAB, leaving the CS RAB in place.

More specifically, in order to transmit data during a CS call, a PS RAB is activated and there is an associated signaling to establish the PS RAB. If there is no more data to transmit, then the PS RAB is released after completing the associated signaling procedures. The addition and deletion of the PS RAB takes time, for example about one second or more in some implementations. During that time, mobility may be lost; this is because in most networks, the network does not act on measurement reports during the time taken to set up or release the PS RAB. This can adversely affect the user experience, as while conditions may exist that would benefit from a handoff occurring, the handoff does not take place, or at least is delayed, with the result that the call may be dropped.

In addition, signaling overhead for the network operators has been increased. Typically, a network operator is not paid for signalling, and yet if the amount of signalling increases dramatically, the network may incur infrastructure costs to upgrade their network to accommodate the increased signalling.

Examples of applications that might perform background polling include Facebook™, Twitter™, and WeatherEye™. Another example of non-user initiated polling is the keep-alive/ping transmissions that take place for always-on applications or devices. Such devices may have an always-on PDP (packet data protocol) context. The wireless device uses a keep-alive/ping mechanism to prevent the PDP context from being closed by the network.

### Summary

According to one broad aspect, the application provides a method in a wireless device, the method comprising: transmitting user initiated polling data during a circuit switched call and when there is no circuit switched call in progress; transmitting non-user initiated polling data only when there is no circuit switched call in progress.

In some embodiments, transmitting non-user initiated polling data only when there is no circuit switched call in progress comprises: following termination of a circuit switched call, waiting at least a predetermined period, and if no further circuit switched call is initiated during the predetermined period, enabling the transmission of non-user initiated polling data.

In some embodiments, the method further comprises: enabling or disabling the transmission of non-user initiated polling data during a circuit switched call as a function of at least one of: a) user input; b) a metric representative of signal quality; and if the transmission of non-user initiated polling data during a circuit switched call is enabled, transmitting non-user initiated polling data during a circuit switched call; wherein transmitting non-user initiated polling data only when there is no circuit switched call in progress comprises: if the transmission of non-user initiated polling data during a circuit switched call is disabled, transmitting non-user initiated polling data only when there is no circuit switched call in progress.

In some embodiments, the method further comprises: for each of at least one application enabling or disabling the transmission of non-user initiated polling data during a circuit switched call as a function of at least one of: a) user input; b) a metric representative of signal quality; for each application, if the transmission of non-user initiated polling data during a circuit switched call is enabled, transmitting non-user initiated polling data from the application during a circuit switched call; wherein transmitting non-user initiated polling data only when there is no circuit switched call in progress comprises: for each application, if the transmission of non-user initiated polling data during a circuit switched call is disabled, transmitting non-user initiated polling data from the application only when there is no circuit switched call in progress.

In some embodiments, the method further comprises: providing a first option and a second option for selection; when the first option is selected, completely disabling the transmission of non-user initiated polling data during a CS call; when the second option is selected, allowing the transmission of non-user initiated polling data by a limited number of selected applications.

In some embodiments, the method further comprises: each of at least one application sending user initiated polling data and non-user initiated polling data to a polling manager; the polling manager allowing the transmission of non-user initiated polling data only when there is no circuit switched call in progress.

In some embodiments, the method further comprises: each of the at least one application sending the user initiated polling data and the non-user initiated polling data to the polling manager along with tag information that identifies polling data as being either user initiated polling data or non-user initiated polling data.

In some embodiments, the method further comprises: grouping non-user initiated polling data from a plurality of applications to form grouped non-user initiated polling data; transmitting the grouped non-user initiated polling data. These steps can also be performed as a stand alone embodiment.

In some embodiments, the method comprises opening a packet switched radio access bearer; transmitting the grouped non-user initiated polling data from multiple applications over the packet switched radio access bearer.

In some embodiments, grouping comprises combining the non-user initiated polling data from multiple applications into a packet; transmitting the grouped non-user initiated polling data comprises transmitting the packet.

In some embodiments, the method further comprises: comparing polling schedules of at least two of the plurality of applications; synchronizing the polling schedules of at least two of the plurality of applications.

In some embodiments, the method further comprises: piggy-backing non-user initiated polling data along with at least one of user initiated polling data, actual user data, and an application layer acknowledgement.

In some embodiments, piggy-backing non-user initiated polling data along with at least one of user initiated polling data, actual user data, and an application layer acknowledgement comprises: opening a packet switched radio access bearer; transmitting the non-user initiated polling data and at least one of user initiated polling data, actual user data, and an application layer acknowledgement over the packet switched radio access bearer.

In some embodiments, the method further comprises: combining the non-user initiated polling data and at least one of user initiated polling data, actual user data, and an application layer acknowledgement into a packet; wherein transmitting the non-user initiated polling data and at least one of user initiated polling data, actual user data, and an application layer acknowledgement over the packet switched radio access bearer comprises transmitting the packet.

In some embodiments, piggy-backing non-user initiated polling data along with at least one of user initiated polling data, actual user data, and an application layer acknowledgement comprises: opening a packet switched radio access bearer; transmitting the non-user initiated polling data and at least one of user initiated polling data, actual user data, and an application layer

According to another broad aspect, the present application provides a computer readable storage medium having stored thereon instructions for execution by a wireless device, that when executed cause the wireless device to execute a method comprising: transmitting user initiated polling data during a circuit switched call and when there is no circuit switched call in progress; transmitting non-user initiated polling data only when there is no circuit switched call in progress.

According to a further broad aspect, the present application provides a wireless device comprising: at least one antenna; wherein the wireless device is configured to transmit user initiated polling data during a circuit switched call and when there is no circuit switched call in progress, and the wireless device is further configured to transmit non-user initiated polling data only when there is no circuit switched call in progress.

In some embodiments, the wireless device further comprises: a polling manager that synchronizes polling from a plurality of applications.

According to still a further broad aspect of the present application, there is provided a method comprising: in a network, receiving at least one measurement report from a wireless device; based on the at least one measurement report received from the wireless device, the network allowing or suspending wireless device terminated data transfer during a circuit switched call.

In some embodiments, the method further comprises: based on RF conditions on the radio link, allowing or suspending mobile originated data transmission during a circuit switched call.

In some embodiments, the method further comprises: queuing data for the wireless device while wireless device terminated data transfer is suspended.

According to yet another broad aspect of the present application there is provided a method comprising: in a network, based on RF conditions on the radio link, allowing or suspending mobile originated data transmission during a circuit switched call.

In some embodiments, suspending mobile originated data transmission during a circuit switched call comprises releasing a PS RAB.

According to another broad aspect of the present application, there is provided a computer readable storage medium having stored thereon instructions for execution by a network, that when executed cause the network to execute a method comprising: in a network, receiving at least one measurement report from a wireless device; based on the at least one measurement report received from the wireless device, the network allowing or suspending wireless device terminated data transfer during a circuit switched call.

In some embodiments, the method further comprises: in the network, based on RF conditions on an uplink connection to the network, allowing or suspending mobile originated data transmission during a circuit switched call.

According to still another broad aspect of the present application, there is provided a computer readable storage medium having stored thereon instructions for execution by a wireless device, that when executed cause the wireless device to execute a method comprising: in a network, based on RF conditions on an uplink connection to the network, allowing or suspending mobile originated data transmission during a circuit switched call.

According to yet another broad aspect of the present application, there is provided a network comprising: a mobile terminated data suspender configured to receive at least one measurement report from a wireless device, and based on the at least one measurement report received from the wireless device, to allow or suspend wireless device terminated data transfer during a circuit switched call.

In some embodiments, the network further comprises: a mobile originated data suspender configured to, based on RF conditions on an uplink connection to the network, allow or suspend mobile originated data transmission during a circuit switched call.

According to another broad aspect of the present application, there is provided a network comprising: a mobile originated data suspender configured to, based on RF conditions on an uplink connection to the network, allow or suspend mobile originated data transmission during a circuit switched call.

### Brief Description of the Drawings

Figure 1A is a flowchart of a first method of controlling whether the transmission of non-user initiated polling data occurs;
Figure 1 B is a flowchart of another method of controlling whether the transmission of non-user initiated polling data occurs;
Figure 1C is a block diagram showing a wireless device and a network;
Figure 1 D is a block diagram of another wireless device and a network;
Figure 2A is a block diagram of an application featuring a polling data generator with tags;
Figure 2B is a flowchart of a method for an application to transmit polling data in a manner that distinguishes between user initiated polling data and non-user initiated polling data;
Figure 3A is a block diagram of an application that transmits user initiated polling data and non-user initiated polling data on separate logical channels;
Figure 3B is a flowchart of a method for an application to transmit user initiated polling data and non-user initiated polling data on separate logical channels;
Figure 4A is a block diagram of a wireless device that allows polling data from multiple applications to be combined into a single PDU;
Figure 4B is a flowchart of a method of combining non-user initiated polling data from multiple applications into a packet;
Figure 5A is a block diagram of portion of a wireless device that allows polling interval that needs to be synchronized;
Figure 5B is a flowchart of a method of synchronizing the polling schedules of at least two applications;
Figure 6A is a block diagram of a polling data combiner;
Figure 6B is a flowchart of a method of performing polling data combination;
Figure 6C is a block diagram of another polling data combiner;
Figure 6D is a flowchart of another method of performing polling data combination;
Figure 7A is a block diagram showing a network that features a mobile terminated data suspender;
Figure 7B is a flowchart of a method of performing mobile terminated data suspension;
Figure 7C is a block diagram showing a network that features a mobile originated data suspender;
Figure 7D is a flowchart of a method of performing mobile originated data suspension; and
Figure 8 is a block diagram of another wireless device.

### Detailed Description

The embodiments set forth below represent the necessary information to enable those skilled in the art to practice the claimed subject matter and illustrate the best mode of practicing such subject matter. Upon reading the following description in light of the accompanying figures, those skilled in the art will understand the concepts of the claimed subject matter and will recognize applications of these concepts not particularly addressed herein. It should be understood that these concepts and applications fall within the scope of the disclosure and the accompanying claims.

Moreover, it will be appreciated that any module, component, or device exemplified herein that executes instructions may include or otherwise have access to computer readable storage medium or media for storage of information, such as computer readable instructions, data structures, program modules, or other data. A non-exhaustive list of examples of computer readable storage media include magnetic cassettes, magnetic tape, magnetic disk storage or other magnetic storage devices, optical disks such as CD-ROM, digital versatile disks (DVD) or other optical storage, volatile and nonvolatile, removable and non-removable media implemented in any method or technology, RAM, ROM, EEPROM, flash memory or other memory technology. Any such computer storage media may be part of the device or accessible or connectable thereto. Any application or module herein described may be implemented using computer readable/executable instructions that may be stored or otherwise held by such computer readable storage media.

Allow non-user initiated polling data transmission only when there is no circuit switched call in progress

In a first embodiment, the wireless device is configured to allow non-user initiated polling data transmission only when there is no circuit switched call in progress. Polling is the procedure whereby an application on the wireless device tries to connect with a server to determine if there is any data for itself, for example as in case of a Facebook application looking for updates. This can be contrasted with user initiated actual data transmission such as browsing initiated by the user or an email sent by the wireless device. User-initiated polling can be due to the fact when a user opens an application, this can force an update of the application content to occur. The multi-RAB behavior will be reduced by eliminating the transmission of non-user initiated polling data from the wireless device during an active voice call, for example from native and other 3rd party applications running on the wireless device. This will reduce the multi-RAB behavior and hence the call drop rates and signaling load for the operator and should have a minimal effect on the user experience of the wireless device.

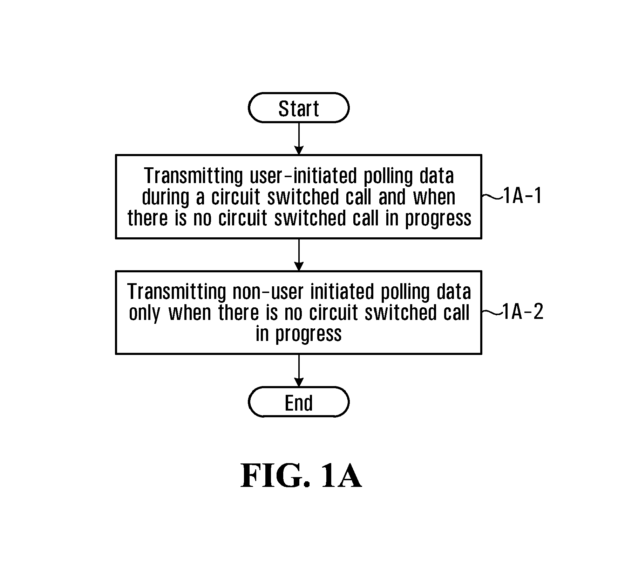

Referring now to Figure 1 A, shown is a flowchart of a method for execution by a wireless device. The method begins at block 1A-1 with the wireless device transmitting user initiated polling data during a circuit switched call and when there is no circuit switched call in progress. The method may also, or alternatively, include the transmission of user initiated actual data transmission, or application layer acknowledgements. The method continues in block 1A-2 with the wireless device transmitting non-user initiated polling data only when there is no circuit switched call in progress. It can be seen that there is a distinction in the manner that user initiated polling data is treated as compared to non-user initiated polling data.

In some embodiments, an option is provided to the user to disable or enable non-user initiated polling data during the CS call. This option may, for example, be made available to the user through a user interface, such as a graphical user interface.

In some embodiments, an option is provided to the user to specify which application or applications are to be allowed to send non-user initiated polling data during a CS call; in this case, the remaining applications are not allowed to send non-user initiated polling data. Alternatively, an option is provided to the user to specify which application or applications are not to be allowed to send non-user initiated polling data; in this case, the remaining applications are allowed to send non-user initiated polling data. This will ensure that the user has control over the functioning of his/her wireless device.

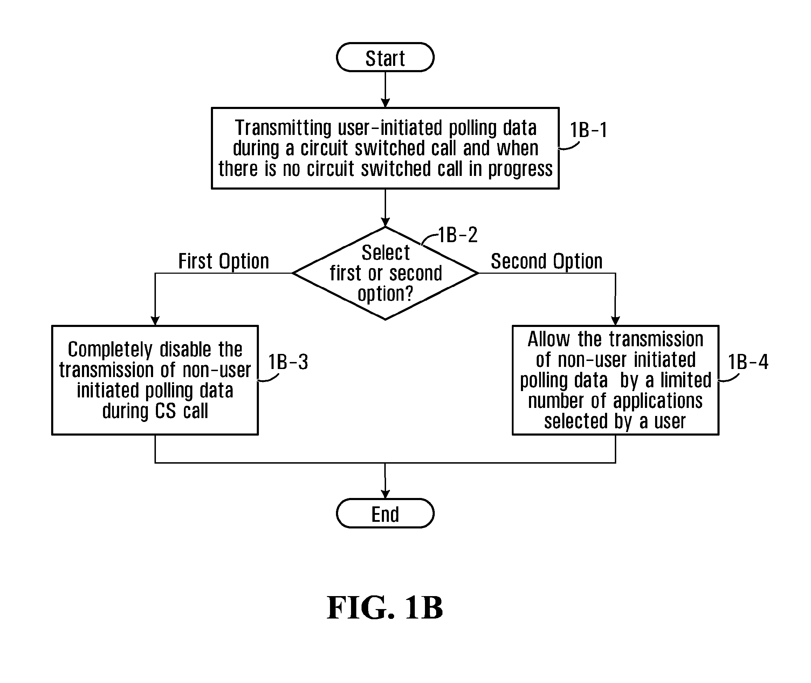

In another embodiment, a user is given the choice of choosing between a first option in which the transmission of non-user initiated polling data during a CS call is completely disabled, and a second option that allows the user to select a limited number of applications which can send polling data during a CS call. A flowchart of such a method is depicted in Figure 1 B. At block 1 B-1, the user-initiated polling data is transmitted during a circuit switched call and when no circuit switched call is in progress. At block 1 B-2, either a first option or a second option is selected. If the first option is selected, then at block 1 B-3, the transmission of non-user initiated polling data during a CS call is completely disabled. If the second option is selected, then at block 1 B-4, the transmission of non-user initiated polling data is allowed for a limited number of applications selected by a user.

In some embodiments, the applications generate the polling data irrespective of the enable/disable status, and another entity such as the below-discussed polling manager, forwards the polling data to the radio layer, or not based on whether the transmission of non-user initiated polling data is enabled during a CS call and whether a CS call is ongoing.

In some embodiments, a polling manager is implemented that manages polling for multiple applications. The polling manager may also interact with a NAS (non-access stratum) layer of the wireless device to determine whether a CS call is ongoing or whether the device is in an idle state.

In some embodiments, the polling, either generally, or for specific applications, is allowed again following a CS call after the wireless device has been in the idle state for at least a predetermined amount of time, for example more than 5 seconds. Similarly, in some embodiments, following termination of a circuit switched call, the wireless device is configured to wait at least a predetermined period, and if no further circuit switched call is initiated during the predetermined period, then transmission of non-user initiated polling data is enabled.

In any of the options described, configuration may be performed on a per-call basis, or may be configured once in which case the selection stays in place until a further configuration takes place.

In some embodiments, each application is made aware of whether a CS call is in progress. This may, for example be achieved by maintaining a state variable to this effect. When the application has a non-user initiated polling data to send, the application self-controls whether or not to send the non-user initiated poll as a function whether or not a CS call is in progress. Specifically, if a CS call is in progress, the application does not send the non-user initiated polling data, while if there is no CS call in progress, the application does send the non-user initiated polling data. User initiated polling is still allowed irrespective of whether there is a CS call in progress.

In some embodiments, each application is made aware of whether a CS call is in progress. This may, for example be achieved by maintaining a state variable to this effect. When the application has a non-user initiated polling data to send, the application self-controls whether or not to send the non-user initiated poll as a function whether or not a CS call is in progress, and whether or not polling is enabled during a CS call or not, either for the specific application, or applications generally. Specifically, if a CS call is in progress and non-user initiated polling is disabled, the application does not send the non-user initiated polling data, while if there is no CS call in progress, the application does send the non-user initiated polling data. If a CS call is in progress and polling is not disabled, the application sends the non-user initiated polling data. User initiated polling is still allowed irrespective of whether there is a CS call in progress.

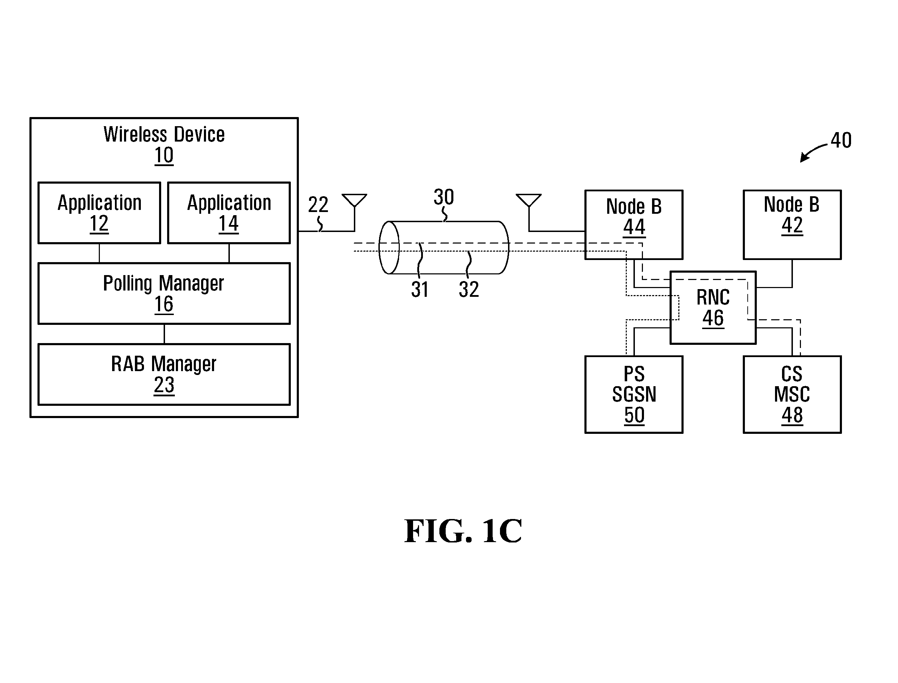

Referring now to Figure 1 C, shown is a wireless device 10. The wireless device 10 has one or more antennas 22, and has other features common to wireless devices such as a processor and memory (not shown). The wireless device has applications 12,14, but more generally, any number of applications may be running on the wireless device. A polling manager 16 manages polling by the applications 12,14.

For the purpose of providing a context, an example network 40 is also depicted in Figure 1C. Shown are two Node B's 42,44 connected to an RNC (radio network controller) 46. The RNC 46 is connected to a CS MSC (mobile switching centre) 48 and to a PS SGSN (Serving GPRS Support Node) 50.

A wireless connection 30 is shown between the wireless device 10 and the network 40. A CS RAB 31, when present, connects the wireless device 10 to the CS MSC 48. A PS RAB 32, when present connects the wireless device to the PS SGSN 50. It is to be understood that the network 40 is a very specific example, and that the wireless device 10 can be used with networks having different configurations. In general, a CS RAB will provide CS connectivity to a CS core network, and a PS RAB will provide PS connectivity to a PS core network.

The wireless device 10 controls RABs through a RAB manager 23, for example, and is aware of whether a CS call is in progress or not.

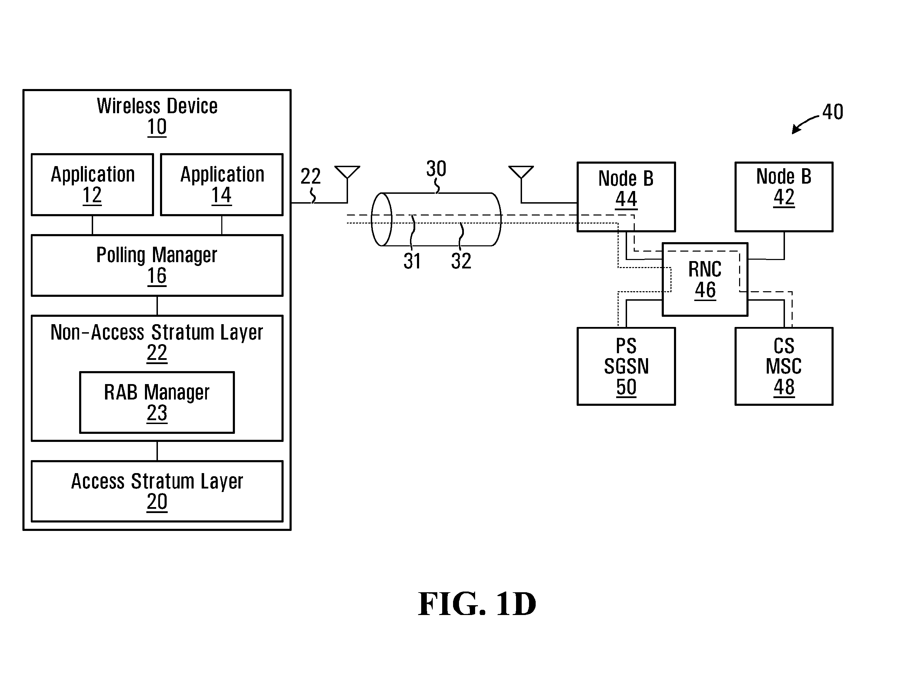

Figure 1 D shows another example of a wireless device which is generally the same as that of Figure 1C, except that the wireless device also has an AS (access stratum) layer 20 which generally includes radio access technology specific functionality, and NAS (non-access stratum) layer 22 which generally includes functionality that is not radio access technology specific. The AS layer 20 can also be referred to as the radio layer. The RAB manager 23 in this case is part of the NAS layer 22. The NAS layer 22 can request a logical path/channel for voice or data; from the perspective of the NAS layer 22, the radio access technology (be it 2G, 3G, etc.) is abstracted out.

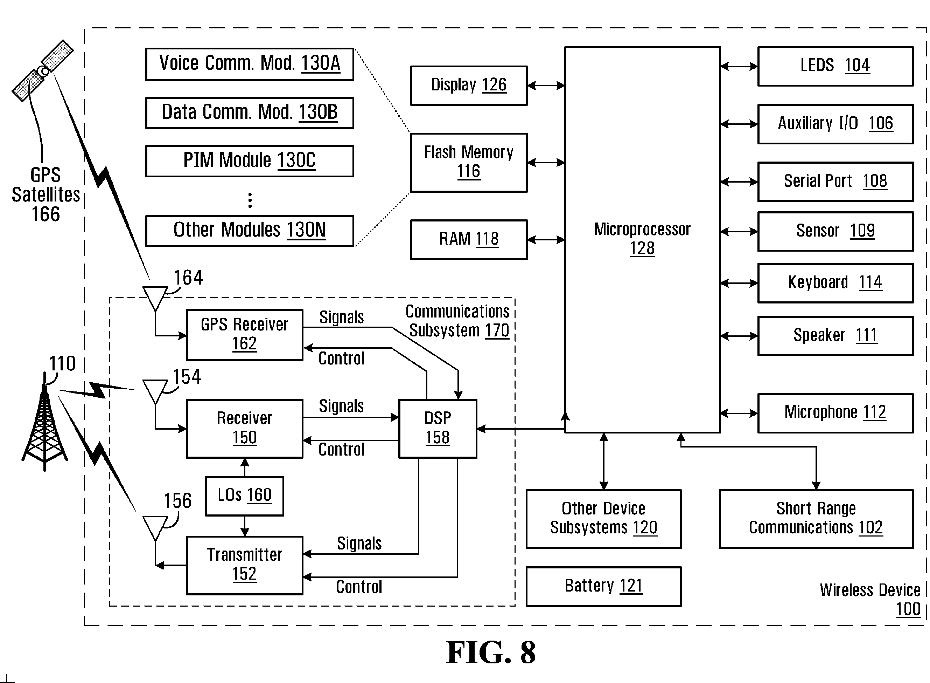

The wireless devices of Figures 1C and 1 D are examples of wireless devices that might, for example, implement the method of Figures 1A or 1 B or any of the other methods described herein. The wireless device described below with reference to Figure 8 is another example. More generally, any wireless device that transmits non-user initiated polling data in accordance with any one or a combination of the methods disclosed herein is contemplated.

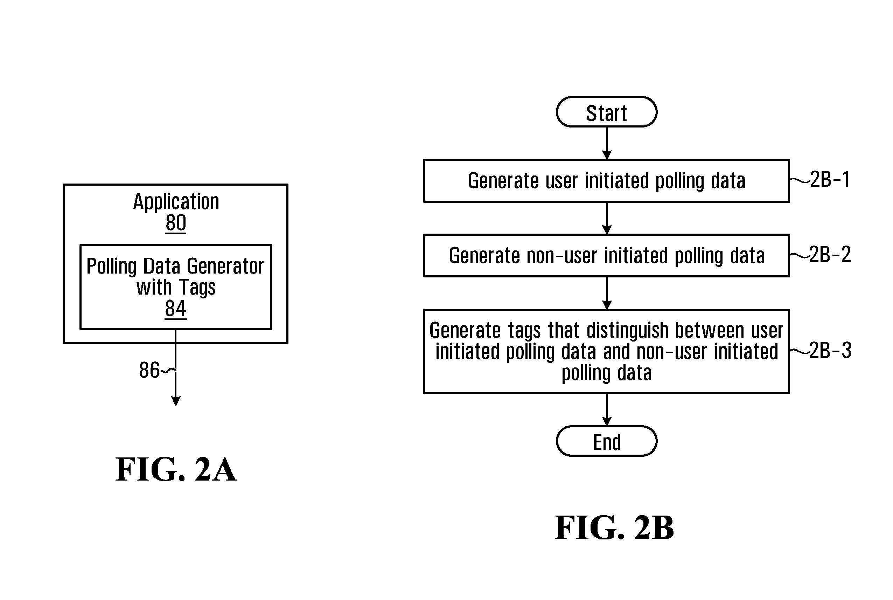

In some embodiments, at least one of the applications 12,14 is configured to pass polling data to the polling manager 16 in such a manner that the polling manager can tell whether the polling data is user initiated or non-user initiated. In a first example, this is achieved by adding a tag to at least some of the polling data to distinguish between user initiated or non-user initiated polling data. A specific example is shown in Figure 2A. Shown is an application 80 that has a polling data generator with tags 84. The polling data 86 output by the polling generator with tags 84 has tags that distinguish between user initiated and non-user initiated polling data. This may for example involve using two different tags, one to indicate user initiated and one to indicate non-user initiated. Alternatively, a tag could be added to non-user initiated polling data only, or a tag could be added to user initiated polling data only. A corresponding method is depicted in Figure 2B. At 2B-1, the application generates user initiated polling data. At 2B-2, the application generates non-user initiated polling data. At 2B-3, the application generates tags that distinguish between user initiated polling data and non-user initiated polling data. The method of Figure 2B can be implemented as a stand alone method, or combined with any of the other methods as described herein.

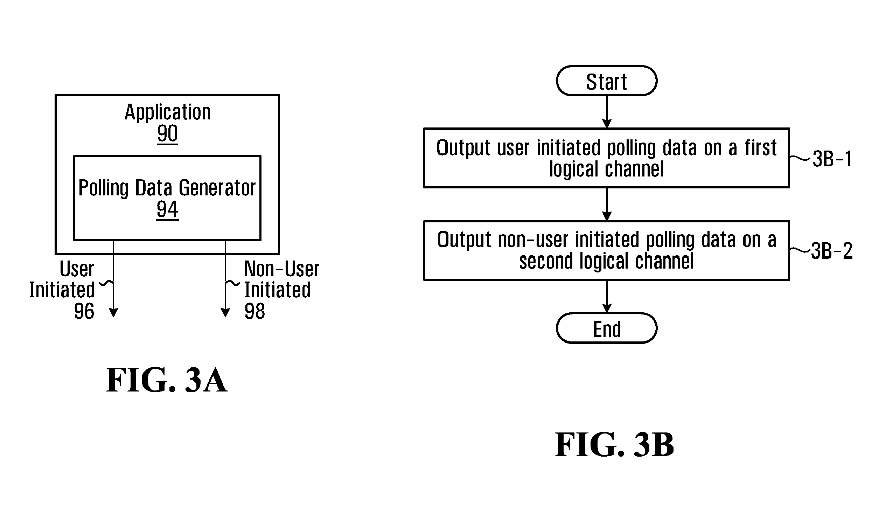

In a second example, the two types of polling data are sent to the polling manager through respective logical channels. An example of this is depicted in Figure 3A. Shown is an application 90 having a polling data generator 94. The polling data generator 94 outputs polling data on two different logical channels 96,98. The first logical channel 96 contains user initiated polling data whereas the second logical channel 98 contains non-user initiated polling data. A corresponding method is depicted in the flowchart of Figure 3B. At 3B-1, the application outputs user initiated polling data on a first logical channel. At 3B-2, the application outputs non-user initiated polling data on a second logical channel. The method of Figure 3B could be implemented as a stand alone method, or combined with any of the other methods described herein.

### Variable Radio Conditions

In some embodiments, RF conditions are also used as an input to a decision as to whether to enable or disable non-user initiated polling data transmission. For example, the transmission of non-user initiated polling data can be enabled or disabled as a function of a metric representative of signal quality. This alone can be used to enable/disable the transmission, or alternatively this metric can be combined with user input. In a specific example, the wireless device is configured to receive a user input to allow a user to select whether or not to consider RF conditions for the purpose of enabling/disabling non-user polling. If the user selects that radio conditions be considered, then radio conditions are used as an input to a decision as to whether to enable or disable non-user polling. If the user selects that no radio conditions be considered, then RF conditions are not used as an input to a decision as to whether to enable or disable non-user polling.

### Efficient Use of RABs

In another embodiment, RABs are efficiently used to increase the amount of data sent per RAB. This may help to decrease the chatty behavior of the applications and increase the amount of data transmitted per unit of signaling. In some embodiments, the non-user initiated polling data from multiple applications is grouped to form grouped non-user initiated polling data. Then, the grouped non-user initiated polling data is transmitted within a single RAB. This reduces associated air interface signaling to set up multiple RABs which is costly for the operator.

In a first example of grouping polling data, at least some of the time the polling of multiple applications is combined in the sense that polling data from multiple applications is combined into a single PDU (protocol data unit) before being sent to the radio layer. For example, a respective SDU (service data unit) may be generated for multiple applications. These are then combined into one PDU for transmission. At the radio network side the SDUs are extracted. In some embodiments, this type of combining of polling data from multiple applications into a single PDU is done or not as a function of an enable/disable setting may be set at the option of a user and/or as a function of RF conditions.

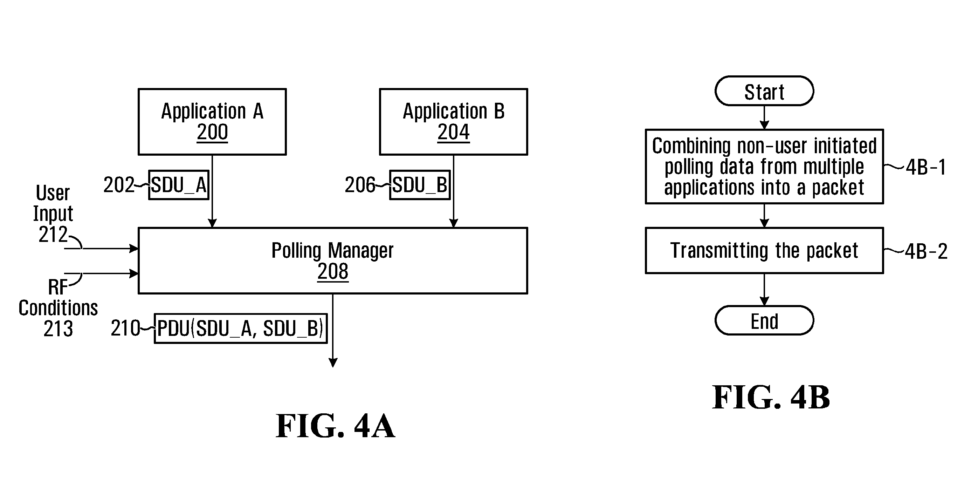

An example of this is depicted in Figure 4A. Shown is a first application, Application A 200 that generates a polling data in a first SDU, SDU_A 202. A second application, Application B 204 is shown generating a polling data in an SDU, SDU_B 206. Both SDUs 202,206 are passed to a polling manager 208 which combines them to produce a single PDU 210 which is passed to the radio layer. In some embodiments, a user input 212 and/or RF conditions input 213 is present which controls whether or not the polling data from multiple applications can be combined into a single PDU. The polling manager 208 may, for example, be implemented in the application layer. With this approach, when the NAS layer receives the PDU 210, only a single RAB needs to be opened to send the polling data of both Application A 200 and Application B 204. In some embodiments, this approach is limited to combining polling data from multiple applications. In other embodiments, the approach is applied more generally to any type of data from the applications.

A corresponding method is depicted in Figure 4B. The method begins at 4B-1 with combining non-user initiated polling data from multiple applications into a packet. The method continues at 4B-2 with transmitting the packet. The method of Figure 4B can be used as a stand alone method or combined with any of the other methods described herein.

In another example of grouping polling data, the grouping is achieved by synchronizing the timing of multiple applications. In some embodiments, such synchronization is done or not as a function of an enable/disable setting set at the option of a user and/or as a function of RF conditions. All the applications register with the polling manager with their respective polling intervals. The polling manager arranges that the polling intervals of various applications are synchronized so that the polling data can be combined and sent as a single PDU to the radio layer.

For example, assume the following polling intervals:
Twitter: 5 minutes
Facebook: 10 minutes
Weathereye: 30 minutes

Initially, these polling intervals may be unaligned, such that:
Twitter is polling at 12:00, 12:05, 12:10 etc.
Facebook is polling at 12:02, 12:12, 12:22 etc.
Weathereye is polling at 12:05, 12:35, etc.

After synchronization, the polling intervals can be aligned as follows:
Twitter is polling at 12:00, 12:05, 12:10 etc.
Facebook is polling at 12:00, 12:10, 12:20 etc.
Weathereye is polling at 12:00, 12:30, etc.

It can be seen that at 12:00, the polls for Twitter, Facebook, and Weathereye can all be sent without the need to establish multiple PS RABs. The polling data can be combined into a single PDU as described above. In some embodiments, the data is not combined into a single PDU; however, the benefit of reduced PS RAB setup is still achieved.

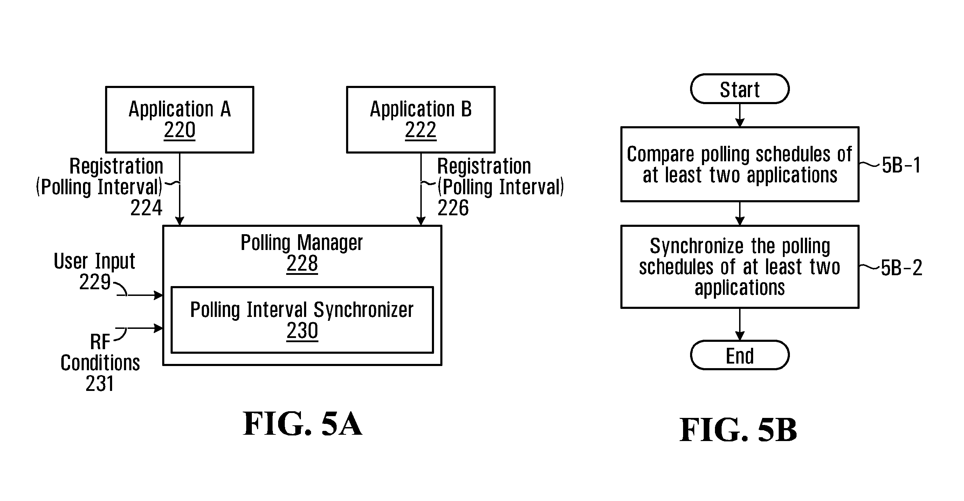

An example of this is shown in Figure 5A. Shown is a first application, Application A 220 and a second application, Application B 222. Also shown is a polling manager 228 comprising a polling interval synchronizer 230. Each application registers with the polling manager 228 with a respective polling interval. Thus, Application A 220 registers at 224 with its polling interval, and Application B 222 registers at 226 with its polling interval. The polling interval synchronizer 230 processes the polling intervals and synchronizes the polling by the applications where possible.

In some embodiments, the polling interval synchronizer 230 sends messages back to the applications that instruct them to align their polling, in accordance with a determination made by the polling interval synchronizer. Referring to the example polling intervals above, this approach can be used to align the 12:02 poll by Facebook with the 12:00 poll by Twitter, such that both are sent at 12:00.

In some embodiments, the polling interval synchronizer 230 achieves synchronization by delaying the polling of one application to align it with another. Referring to the example polling intervals, above, this can be used to align the 12:02 poll by Facebook with the 12:00 poll by Twitter by receiving the poll from Twitter at 12:02, but delaying transmission of the poll until 12:02 such that both are sent at 12:02. With this approach, the polling interval synchronizer 230 does not need to signal back to the applications to achieve the synchronization. In some embodiments, the polling manager 228 operates as a function of a user input 229 and/or RF conditions input 231 which can enable or disable the synchronization of polling data.

A corresponding method is depicted at Figure 5B. At 5B-1, polling schedules of at least two applications are compared. At step 5B-2, the polling schedules of the at least two applications are synchronized. Synchronization in this context can, for example, mean that at least some of the time, the polling data from the two applications can be grouped either by sending it in a single PDU, or by sending it in consecutive PDUs on a single RAB. The method of Figure 5B can be implemented as a stand alone method or combined with any of the other methods described herein. The method can be made conditional upon whether a user has enabled/disabled the synchronization of polling data and/or RF conditions.

Piggy-back Non-user initiated Polling Data Along with User initiated Polling Data

In another embodiment, at least some of the time, non-user initiated polling data is piggy-backed along with user initiated polling data or other data such as user-initiated actual data or application layer acknowledgements to user-terminated data. In some embodiments, the piggy-backing is performed for data from one application. In some embodiments, the piggy-backing is done for data from the same or different applications. In some embodiments, this piggy-backing is only performed when a CS call is in progress. In some embodiments, this piggy-backing is performed irrespective of whether or not a CS call is in progress. For example, suppose there is actual data, application layer acknowledgement, or user-initiated polling data to send at 11:59, and an application is scheduled/expected to send a poll at 12:00. The application can be asked for its poll early such that it can be combined with the actual data, application layer acknowledgement or user-initiated polling data. Alternatively, a copy of the polling information can be maintained, and the copy used to combine with the actual data. Then, when the 12:00 poll arrives, it is discarded. Alternatively, the schedule for the application can be moved forward by a minute such that there is no 12:00 poll at all. This piggy-backing can be in the sense of combining the data into a single PDU to be sent to the radio layer, or in the sense of not setting up multiple PS RABs. In some embodiments, a polling manager does this combining.

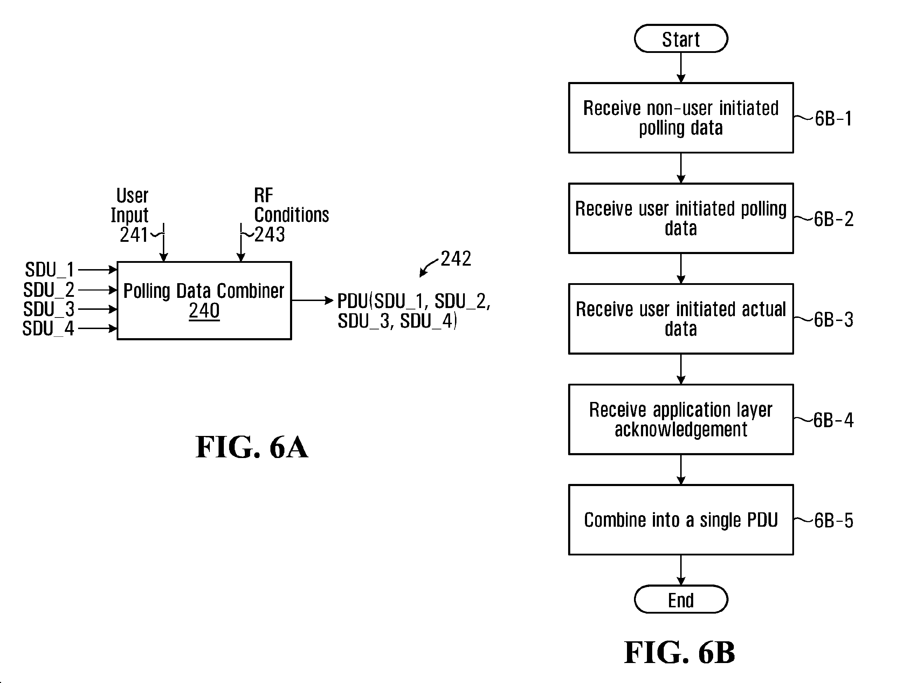

A first example is depicted in Figure 6A. A polling data combiner 240 receives non-user initiated polling data in SDU_1, user initiated polling data in SDU_2, user-initiated actual data in SDU_3, and application layer acknowledgement in SDU_4. These are combined into a single PDU 242 output by the polling data combiner 240. More generally, non-user initiated polling data is combined with at least one of user-initiated actual data, application layer acknowledgement and user initiated polling data. In some embodiments, an input 241 is provided for receiving a user input for a user to select whether this type of combination is to occur or not. In some embodiments, an input 243 is provided for receiving an RF conditions parameter. In an embodiment featuring input 243, this type of combining is performed when RF conditions are "good" as defined by some criteria, and is not performed when RF conditions are "bad" as defined by some criteria. In another embodiment featuring input 243, this type of combining is performed when RF conditions are "good" as defined by some criteria, and when RF conditions are "bad" as defined by some criteria then only user initiated polling and/or actual data are transmitted on the PS RAB, the transmission of non-user initiated polling data being disabled.

A corresponding method is depicted in Figure 6B. At 6B-1, non-user initiated polling data is received. At 6B-2, user initiated polling data is received. At 6B-3, user-initiated actual data is received. At 6B-4, an application layer acknowledgement is received. At 6B-5, the non-user initiated polling data, the user initiated polling data, the user-initiated actual data and the application layer acknowledgement are combined into a single PDU. The method of Figure 6B can be made conditional upon user input and/or RF conditions as discussed with reference to Figure 6A. The method of Figure 6B can be implemented as a stand alone method or combined with any of the other methods described herein.

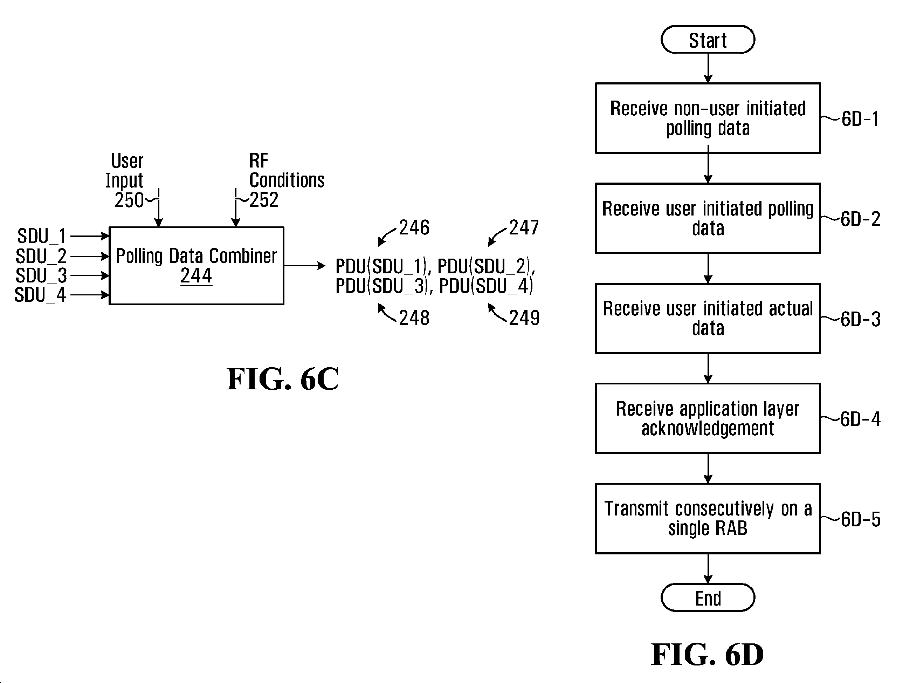

A second example is depicted in Figure 6C. A polling data combiner 244 receives non-user initiated polling data in SDU_1, receives user initiated polling data in SDU_2, receives user-initiated actual data in SDU_3, and receives application layer acknowledgement in SDU_4. Four PDUs are generated, namely a first PDU 246 containing the non-user initiated polling data SDU_1, a second PDU 247 containing the user initiated polling data SDU_2, a third PDU 248 containing the user initiated actual data, and a fourth PDU 249 containing the application layer acknowledgement. These are sent consecutively on the same RAB. Only a single RAB is set up to transmit PDUs 246, 247, 248 and 249. More generally, non-user initiated polling data and at least one of user-initiated actual data, application layer acknowledgement and user initiated polling data are sent on a single RAB. In some embodiments, an input 250 is provided for receiving a user input for a user to select whether this type of combination is to occur or not. In some embodiments, an input 252 is provided for receiving an RF conditions parameter. In an embodiment featuring input 250, this type of combining is performed when RF conditions are "good" as defined by some criteria, and is not performed when RF conditions are "bad" as defined by some criteria. In another embodiment featuring input 250, this type of combining is performed when RF conditions are "good" as defined by some criteria, and when RF conditions are "bad" as defined by some criteria then only user initiated polling and/or actual data are transmitted on the PS RAB, the transmission of non-user initiated polling data being disabled.

A corresponding method is depicted in Figure 6D. The method begins with receiving non-user initiated polling data at 6D-1. At 6D-2, user initiated polling data is received. At 6D-3, user initiated actual data is received. At 6D-4, an application layer acknowledgement is received. At 6D-5, the non-user initiated polling data, the user initiated polling data, the user initiated actual data, and the application layer acknowledgement are transmitted consecutively on a single RAB. The method of Figure 6D can be made conditional upon user input and/or RF conditions as discussed with reference to Figure 6C. The method of Figure 6D can be implemented as a stand alone method or combined with any of the other methods described herein.

### Suspension of Mobile Terminated Data

As indicated previously, in some networks, the network does not act on measurement reports from the wireless device during the multi-RAB reconfiguration procedure effectively creating a mobility lock. For example, in some 3G networks, the UTRAN (UMTS Terrestial Radio Access Network) does not act on the measurement reports from the wireless device during the multi-RAB reconfiguration. In challenging RF conditions, bursty data activity triggers multi-RAB reconfiguration which in turn causes mobility lock and may lead to call drops, as the RF conditions may deteriorate to a point of being unable to sustain the call. In some embodiments, the network takes steps to reduce multi-RAB behavior during poor RF (radio frequency) conditions.

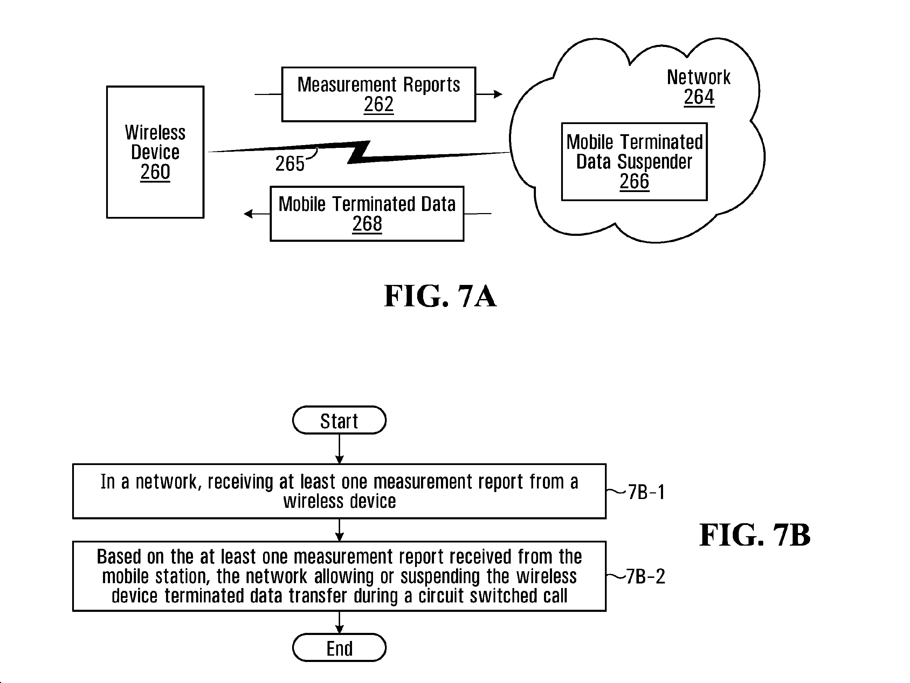

Based on the measurement reports from the wireless device, the network can allow or suspend the mobile terminated data transfer during the circuit switched call. An example of this is depicted in Figure 7A. Shown is a wireless device 260 in communication with a network 264 over a wireless connection 265. Wireless device 260 sends measurement reports 262 to the network 264 and the network sends mobile terminated data 268 to the wireless device. Other forms of communication between a wireless device and the network may also be present. The network 264 has a mobile terminated suspender 266 that determines whether a mobile terminated data transfer should be allowed or suspended. In particular, based on the measurement report 262 received from the wireless device, the mobile terminated data suspender 266 makes a decision as to whether or not to allow or suspend the mobile terminated data transfer during a circuit switched call. In the event the decision is to suspend the mobile terminated data transfer, data may be queued for later delivery. The mobile terminated data suspender 266 may, for example, be located in the radio access network, for example in a radio network controller. Signalling between the mobile terminated data suspender 266 and the packet switched core network may be employed to suspend the mobile terminated data transfer.

A corresponding method is depicted in Figure 7B. At 7B-1, the network receives at least one measurement report from a wireless device. At 7B-2, based on the at least one measurement report received from the wireless device, the network allows or suspends the wireless device terminated data transfer during a circuit switched call. The method of Figure 7B can be implemented as a stand alone method or combined with any of the other methods described herein.

### Suspension of Mobile Originated Data

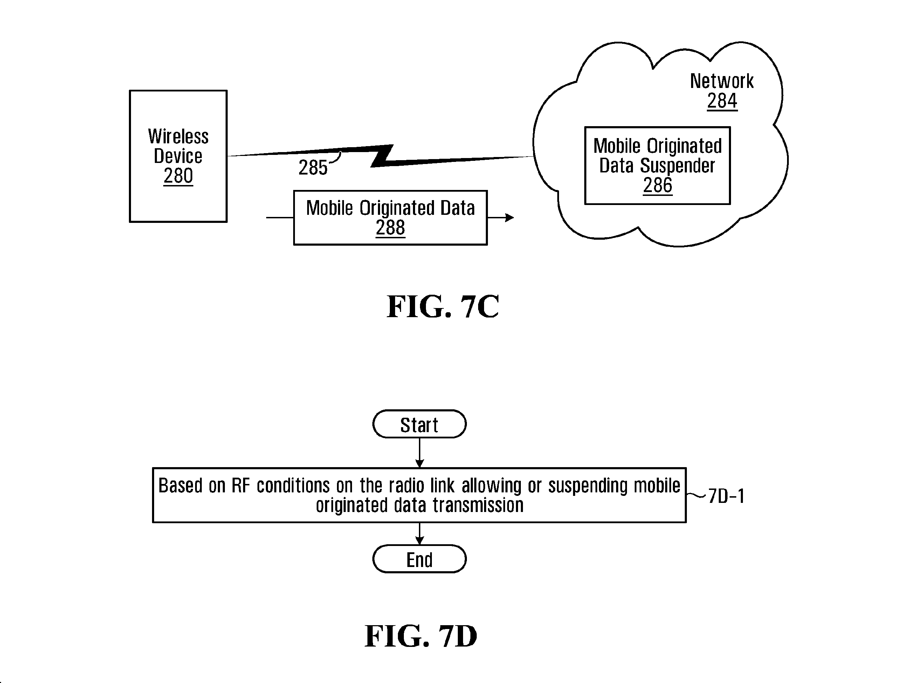

In some embodiments, based on the RF conditions on the uplink, during which the RF conditions on the downlink may be acceptable or not, the network can allow or suspend the mobile originated data transfer during the circuit switched call. An example of this is depicted in Figure 7C. Shown is a wireless device 280 in communication with a network 284 over a wireless connection 285. The network 284 measures RF conditions (or other signal quality metric) for the radio link (the uplink, downlink, or both) using any suitable technique. The network 284 has a mobile originated suspender 288 that determines whether mobile originated data transfer should be allowed or suspended. In particular, based on the uplink RF conditions, the mobile originated data suspender 288 makes a decision as to whether or not to allow or suspend the mobile originated data transfer during a circuit switched call. In the event the decision is to suspend the mobile originated data transfer, this can be achieved, for example, by releasing the PS RAB so that no mobile originated data can be transmitted by the wireless device 280. In some embodiments, the network sends a PS RAB release message to the wireless device 280 to achieve this. In some embodiments, the PS RAB release message includes a timeout setting for the wireless device; upon receipt of such a message, the wireless device must wait for the timeout amount before attempting to reestablish the PS RAB. In some embodiments, a default timeout value is assumed such that there is no need to send the timeout setting as part of the PS RAB release message. The mobile terminated data suspender 288 may, for example, be located in the radio access network, for example in a radio network controller.

A corresponding method is depicted in Figure 7D. At 7D-1, based on RF conditions on the uplink, the network allows or suspends the wireless device terminated data transfer during a circuit switched call. In some embodiments, both the method of Figure 7B and the method of Figure 7D are combined. More generally, the method of Figure 7D can be implemented as a stand alone method or combined with any of the other methods described herein.

For the examples of Figures 7A and 7C, of course, the network has other functionality, not shown, as would be required to implement a working system; examples include network elements such as: access nodes, such as base stations, base station transceivers, node B's; control nodes such as radio network controllers or mobile switching centers to name a few examples; core packet network elements such as a PS SGSN. The mobile terminated data suspender and/or the mobile originated data suspender may, for example, be implemented in one or a combination of such network elements.

### Another Wireless device

Referring now to FIG. 8, a block diagram is shown of an embodiment of another wireless device 100 that may implement any of the device methods described herein. It is to be understood that the wireless device 100 is shown with very specific details for exemplary purposes only.

The wireless device 100 has a housing that may be elongated vertically, or may take on other sizes and shapes (including clamshell housing structures). The keyboard 114 may include a mode selection key, or other hardware or software for switching between text entry and telephony entry. Alternatively, the wireless device 100 may have a housing that does not take on other sizes and shapes.

A microprocessor 128 is shown schematically as coupled between a keyboard 114 and a display 126. The microprocessor 128 controls operation of the display 126, as well as overall operation of the wireless device 100, in response to actuation of keys on the keyboard 114 by a user.

In addition to the microprocessor 128, other parts of the wireless device 100 are shown schematically. These include: a communications subsystem 170; a short-range communications subsystem 102; the keyboard 114 and the display 126, along with other input/output devices including a set of LEDs 104, a set of auxiliary I/O devices 106, a serial port 108, a speaker 111 and a microphone 112; as well as memory devices including a flash memory 116 and a Random Access Memory (RAM) 118; and various other device subsystems 120. The keyboard 114, speaker 111, microphone 112, display 126, and LEDs 104 are part of the user-interface.

The wireless device 100 may have a battery 121 to power the active elements of the wireless device 100. The wireless device 100 is in some embodiments a two-way radio frequency (RF) communication device having voice and data communication capabilities. In addition, the wireless device 100 in some embodiments has the capability to communicate with other computer systems via the Internet.

Operating system software executed by the microprocessor 128 is in some embodiments stored in a persistent store, such as the flash memory 116, but may be stored in other types of memory devices, such as a read only memory (ROM) or similar storage element. In addition, system software, specific device applications, or parts thereof, may be temporarily loaded into a volatile store, such as the RAM 118. Communication signals received by the wireless device 100 may also be stored to the RAM 118.

The microprocessor 128, in addition to its operating system functions, enables execution of software applications on the wireless device 100. A predetermined set of software applications that control basic device operations, such as a voice communications module 130A and a data communications module 130B, may be installed on the wireless device 100 during manufacture. In addition, a personal information manager (PIM) application module 130C may also be installed on the wireless device 100 during manufacture. The PIM application is in some embodiments capable of organizing and managing data items, such as e-mail, calendar events, voice mails, appointments, and task items. The PIM application is also in some embodiments capable of sending and receiving data items via a wireless network 110. In some embodiments, the data items managed by the PIM application are seamlessly integrated, synchronized and updated via the wireless network 110 with the device user's corresponding data items stored or associated with a host computer system.

Additional software modules, illustrated as another software module 130N, may be installed during manufacture. The software modules may, for example, include one or more modules that control the execution of the methods described above.

Communication functions, including data and voice communications, are performed through the communication subsystem 170, and possibly through the short-range communications subsystem 102. The communication subsystem 170 includes a receiver 150, a transmitter 152, a GPS receiver 162, and one or more antennas, illustrated as a receive antenna 154, a transmit antenna 156, and a GPS antenna 164. In addition, the communication subsystem 170 also includes a processing module, such as a digital signal processor (DSP) 158, and local oscillators (LOs) 160.

The specific design and implementation of the communication subsystem 170 is dependent upon the communication network in which the wireless device 100 is intended to operate. For example, the communication subsystem 170 of the wireless device 100 may be designed to operate with the Mobitex™, DataTAC™ or General Packet Radio Service (GPRS) mobile data communication networks and also designed to operate with any of a variety of voice communication networks, such as Advanced Mobile Phone Service (AMPS), Time Division Multiple Access (TDMA), Code Division Multiple Access (CDMA), Personal Communications Service (PCS), Global System for Mobile Communications (GSM), etc. Examples of CDMA include 1X and 1x EV-DO. The communication subsystem 170 may also be designed to operate with an 802.11 Wi-Fi network, and/or an 802.16 WiMAX network. Other types of data and voice networks, both separate and integrated, may also be utilized with the wireless device 100.

Network access may vary depending upon the type of communication system. For example, in the Mobitex™ and DataTAC™ networks, wireless devices are registered on the network using a unique Personal Identification Number (PIN) associated with each device. In GPRS networks, however, network access is typically associated with a subscriber or user of a device. A GPRS device therefore typically has a subscriber identity module, (often referred to as a SIM card), in order to operate on a GPRS network.

When network registration or activation procedures have been completed, the wireless device 100 may send and receive communication signals over the communication network 110. Signals received from the communication network 110 by the receive antenna 154 are routed to the receiver 150, which provides for signal amplification, frequency down conversion, filtering, channel selection, etc., and may also provide analog to digital conversion. Analog-to-digital conversion of the received signal allows the DSP 158 to perform more complex communication functions, such as demodulation and decoding. In a similar manner, signals to be transmitted to the network 110 are processed (e.g., modulated and encoded) by the DSP 158 and are then provided to the transmitter 152 for digital to analog conversion, frequency up conversion, filtering, amplification and transmission to the communication network 110 (or networks) via the transmit antenna 156.

In addition to processing communication signals, the DSP 158 provides for control of the receiver 150, the transmitter 152, and the GPS receiver 162. For example, gains applied to communication signals in the receiver 150 and the transmitter 152 may be adaptively controlled through automatic gain control algorithms implemented in the DSP 158.

In a data communication mode, a received signal, such as a text message or web page download, is processed by the communication subsystem 170 and is input to the microprocessor 128. The received signal is then further processed by the microprocessor 128 for an output to the display 126, or alternatively to some other auxiliary I/O devices 106. A device user may also compose data items, such as e-mail messages, using the keyboard 114 and/or some other auxiliary I/O device 106, such as a touchpad, a rocker switch, a thumb-wheel, or some other type of input device. The composed data items may then be transmitted over the communication network 110 via the communication subsystem 170.

In a voice communication mode, overall operation of the device is substantially similar to the data communication mode, except that received signals are output to a speaker 111, and signals for transmission are generated by a microphone 112. Alternative voice or audio I/O subsystems, such as a voice message recording subsystem, may also be implemented on the wireless device 100. In addition, the display 126 may also be utilized in voice communication mode, for example, to display the identity of a calling party, the duration of a voice call, or other voice call related information.

Location determination using GPS technology involves receiving GPS signals from GPS satellites 166 on the antenna 164. The GPS signals are received using the GPS receiver 162 and processed by the DSP 158. Typically, GPS signals from at least four satellites are processed. Further details of GPS are known in the art and are omitted for simplicity.

The short-range communications subsystem 102 enables communication between the wireless device 100 and other proximate systems or devices, which need not necessarily be similar devices. For example, the short range communications subsystem may include an infrared device and associated circuits and components, or a Bluetooth™ communication module to provide for communication with similarly-enabled systems and devices.

Numerous modifications and variations of the present disclosure are possible in light of the above teachings. It is therefore to be understood that within the scope of the appended claims, the disclosure may be practiced otherwise than as specifically described herein.

For example, while the specific examples have assumed a 3G network, the same approach can be applied in other networks. In one specific example, the approach is applied to a 2G network with DTM (dual transfer mode).

Where various embodiments feature behaviour that is contingent on RF conditions, more generally such behaviour can be made dependent on some metric representative of signal quality.

## Claims

1. A method in a wireless device, the method comprising:
transmitting user initiated polling data during a circuit switched call and when there is no circuit switched call in progress;
transmitting non-user initiated polling data only when there is no circuit switched call in progress.

2. The method of claim 1 wherein transmitting non-user initiated polling data only when there is no circuit switched call in progress comprises:
following termination of a circuit switched call, waiting at least a predetermined period, and if no further circuit switched call is initiated during the predetermined period, enabling the transmission of non-user initiated polling data.

3. The method of claim 1 or 2 further comprising:
enabling or disabling the transmission of non-user initiated polling data during a circuit switched call as a function of at least one of:
a) user input;
b) a metric representative of signal quality; and
if the transmission of non-user initiated polling data during a circuit switched call is enabled, transmitting non-user initiated polling data during a circuit switched call;
wherein transmitting non-user initiated polling data only when there is no circuit switched call in progress comprises: if the transmission of non-user initiated polling data during a circuit switched call is disabled, transmitting non-user initiated polling data only when there is no circuit switched call in progress.

4. The method of any preceding claim further comprising:
for each of at least one application enabling or disabling the transmission of non-user initiated polling data during a circuit switched call as a function of at least one of:
a) user input;
b) a metric representative of signal quality;
for each application, if the transmission of non-user initiated polling data during a circuit switched call is enabled, transmitting non-user initiated polling data from the application during a circuit switched call;
wherein transmitting non-user initiated polling data only when there is no circuit switched call in progress comprises: for each application, if the transmission of non-user initiated polling data during a circuit switched call is disabled, transmitting non-user initiated polling data from the application only when there is no circuit switched call in progress.

5. The method of any preceding claim further comprising:
providing a first option and a second option for selection;
when the first option is selected, completely disabling the transmission of non-user initiated polling data during a CS call;
when the second option is selected, allowing the transmission of non-user initiated polling data by a limited number of selected applications.

6. The method of any preceding claim further comprising:
each of at least one application sending user initiated polling data and non-user initiated polling data to a polling manager;
the polling manager allowing the transmission of non-user initiated polling data only when there is no circuit switched call in progress and optionally further comprising:
each of the at least one application sending the user initiated polling data and the non-user initiated polling data to the polling manager along with tag information that identifies polling data as being either user initiated polling data or non-user initiated polling data.

7. A method according to any preceding claim further comprising:
grouping non-user initiated polling data from a plurality of applications to form grouped non-user initiated polling data;
transmitting the grouped non-user initiated polling data and optionally further comprising at least one of:
a) opening a packet switched radio access bearer, transmitting the grouped non-user initiated polling data from multiple applications over the packet switched radio access bearer;
b) grouping comprises combining the non-user initiated polling data from multiple applications into a packet, transmitting the grouped non-user initiated polling data comprises transmitting the packet;
c) comparing polling schedules of at least two of the plurality of applications, synchronizing the polling schedules of at least two of the plurality of applications.

8. The method of any preceding claim further comprising:
piggy-backing non-user initiated polling data along with at least one of user initiated polling data, actual user data, and an application layer acknowledgement, and wherein piggy-backing non-user initiated polling data along with at least one of user initiated polling data, actual user data, and an application layer acknowledgement optionally comprises:
opening a packet switched radio access bearer;
transmitting the non-user initiated polling data and at least one of user initiated polling data, actual user data, and an application layer acknowledgement over the packet switched radio access bearer, or
opening a packet switched radio access bearer;
transmitting the non-user initiated polling data and at least one of user initiated polling data, actual user data, and an application layer acknowledgement over the packet switched radio access bearer.

9. The method of claim 8 wherein piggy-backing non-user initiated polling data along with at least one of user initiated polling data, actual user data, and an application layer acknowledgement comprises:
opening a packet switched radio access bearer;
transmitting the non-user initiated polling data and at least one of user initiated polling data, actual user data, and an application layer acknowledgement over the packet switched radio access bearer, the method further comprising:
combining the non-user initiated polling data and at least one of user initiated polling data, actual user data, and an application layer acknowledgement into a packet;
wherein transmitting the non-user initiated polling data and at least one of user initiated polling data, actual user data, and an application layer acknowledgement over the packet switched radio access bearer comprises transmitting the packet.

10. A computer readable storage medium having stored thereon instructions for execution by a wireless device, that when executed cause the wireless device to execute a method according to any one of claims 1 to 9

11. A wireless device comprising:
at least one antenna;
wherein the wireless device is configured to carry out the method of any one of claims 1 to 9.

12. The wireless device of claim 11 further comprising:
a polling manager that synchronizes polling from a plurality of applications.

13. A method in a network of allowing or suspending wireless device terminated data transfer during a circuit switched call, the method comprising at least one of:
receiving at least one measurement report from a wireless device and based on the at least one measurement report received from the wireless device allowing or suspending wireless device terminated data transfer during a circuit switched call;
based on RF conditions on the radio link, allowing or suspending mobile originated data transmission during a circuit switched call.

14. The method of claim 13 further comprising:
queuing data for the wireless device while wireless device terminated data transfer is suspended.

15. The method of claim 13 or 14 wherein suspending mobile originated data transmission during a circuit switched call comprises releasing a PS RAB.

16. A computer readable storage medium having stored thereon instructions for execution by a network, that when executed cause the network to execute a method according to any one of claims 13 to 15.

17. A network comprising:
a mobile terminated data suspender configured to receive at least one measurement report from a wireless device, and to carry out the method of any one of claims 13 to 15..
